# EUROPÄISCHE PATENTANMELDUNG

(11) **EP 0 525 485 A1**
(43) Veröffentlichungstag der Anmeldung: **03.02.1993**
(21) Anmeldenummer: 92111840.2
(22) Anmeldetag: 11.07.1992
(51) Int. Cl.: F01N 7/08, F16L 27/10

(54) **Verbindung zwischen Abgasrohr und Endrohr**

(30) Priorität: 20.07.1991 DE 4124204
(71) Anmelder: DEERE & COMPANY, Moline, Illinois 61265 (US)
(72) Erfinder: Sauter, Udo, W-6911 Malsch (DE)
(74) Vertreter: Feldmann, Bernhard

(57) **Zusammenfassung**

Es wird eine Verbindung zwischen Abgasrohr (10) und Endrohr (12) der Verbrennungskraftmaschine eines Fahrzeuges, insbesondere eines landwirtschaftlichen oder Nutzfahrzeuges, beschrieben, bei der das freie Ende (13) des Abgasrohres (10) in einen Abschnitt (20) des Endrohres (12) hineinragt und zwischen beiden Rohren (10, 12) ein ringförmiger Zwischenraum ausgebildet ist und sich das Endrohr (12) am Abgasrohr (10) über ein elastisch verformbares Bauteil abstützt. Eine vorteilhafte Verbindung zwischen einem Vibrationen ausgesetzten Abgasrohr (10) und einem Endrohr (12) ist dadurch gegeben, daß das Bauteil eine wenigstens bereichsweise konisch ausgebildete Schraubenfeder (24) ist, die in Rohrrichtung relativ weich und in Querrichtung relativ steif ausgebildet ist.

## Beschreibung

Die Erfindung betrifft eine Verbindung zwischen Abgasrohr und Endrohr der Verbrennungskraftmaschine eines Fahrzeuges, insbesondere eines landwirtschaftlichen oder Nutzfahrzeuges, wobei das freie Ende des Abgasrohres in einen Abschnitt des Endrohres hineinragt und zwischen beiden Rohren ein ringförmiger Zwischenraum ausgebildet ist und sich das Endrohr am Abgasrohr über ein elastisch verformbares Bauteil abstützt.

Die Abgase der elastisch gelagerten Verbrennungskraftmaschine eines Fahrzeuges, beispielsweise eines Ackerschleppers, werden über ein Abgassammelrohr, einen Schalldämpfer, ein Abgasrohr und ein Endrohr ins Freie abgeführt. Häufig ist dabei das Endrohr lösbar auf das Abgasrohr aufgesteckt, wie es beispielsweise aus der DE-A- 30 23 758 hervorgeht. Die Verbrennungskraftmaschine ist elastisch im Fahrzeug gelagert und überträgt beim Betrieb starke Vibrationen auf das Abgasrohr und das Endrohr. Diese Vibrationen erschweren die Verwendung von langen Endrohren, die zudem ein relativ hohes Gewicht aufweisen und daher zusätzlich abgestützt werden müssen.

Das DE-GM 78 38 091 beschreibt ein als Abgasendrohr ausgebildetes Grundrohr, dessen Endbereich mit einem konzentrischen Blendenrohr umgeben ist. Das Blendenrohr soll dabei der Verkleidung des Abgasendrohres dienen. In das Blendenrohr ist ein federndes Klemmglied eingelagert, welches axial nach innen ausgestellte Federstege aufweist. Beim Aufschieben oder Aufdrehen des Blendenrohres auf das Grundrohr stellt sich das federnde Klemmglied auf den jeweiligen Grundrohrdurchmesser ein und verbindet zugleich klemmend das Blendenrohr und das Abgasendrohr. Hierdurch soll die Rohrblende ohne Werkzeug auf dem Grundrohr befestigbar sein. Diese bekannte Rohrverbindung gewährleistet jedoch bei Verwendung längerer Endrohre, wie sie beispielsweise bei Ackerschleppern verwendet werden, keine ausreichende Befestigung.

Die mit der Erfindung zu lösende Aufgabe wird darin gesehen, eine kostengünstige Verbindung zwischen einem Vibrationen ausgesetzten Abgasrohr und einem Endrohr der eingangs genannten Art anzugeben, bei der die genannten Probleme überwunden werden.

Die Aufgabe wird erfindungsgemäß dadurch gelöst, daß das Bauteil eine wenigstens bereichsweise konisch ausgebildete Schraubenfeder ist, die in Rohrrichtung relativ weich und in Querrichtung relativ steif ausgebildet ist. Vibrationen der Verbrennungskraftmaschine werden durch die flexible Schraubenfeder aufgenommen. Die erfindungsgemäße flexible Verbindung zwischen Abgasrohr und Endrohr eignet sich insbesondere für schwere und lange Endrohre, die zudem fest mit dem Fahrzeugrumpf, z. B. der Fahrzeugkabine, verbunden sind.

Die als Zentrierfeder wirkende Schraubenfeder hat gegenüber der Verwendung eines flexiblen Rohrstückes, beispielsweise eines gewellten Metallschlauches, Vorteile hinsichtlich der Kosten, der Einbaulänge, der Schwingungsentkoppelung sowie der Montage bzw. Demontage. Die Schraubenfeder sollte in Rohrrichtung relativ weich und in Querrichtung relativ steif ausgebildet sein. Damit kann sie die in Rohrrichtung auftretenden Hauptschwingungsbewegungen abfangen und dennoch eine ausreichende Zentrierung in radialer Richtung sicherstellen. Durch die Verwendung der Schraubenfeder werden die beiden Rohre zueinander zentriert, so daß ein Zusammenstoßen des Abgasrohres und des Endrohres und damit verbundene Geräusche vermieden werden.

Da das freie Ende des Abgasrohres in einen Abschnitt des Endrohres hineinragt und zwischen beiden Rohren ein ringförmiger Zwischenraum ausgebildet ist, kann das Ejektorprinzip nutzbar gemacht werden, demgemäß aufgrund der Sogwirkung des austretenden Abgases durch den Zwischenraum Umgebungsluft angesaugt wird, die sich mit dem relativ heißen Abgas vermischt und dieses abkühlt, so daß eine übermäßige Erwärmung des Endrohres vermieden werden kann. Ferner kann hierdurch vermieden werden, daß eindringendes Regenwasser sowie im Endrohr entstehendes Kondenswasser in das Abgasrohr bzw. den Schalldämpfer und somit in die Verbrennungsräume gelangen.

Zweckmäßigerweise ist das Endrohr in seinem dem Abgasrohr zugewandten Bereich aufgeweitet und schließt das freie Ende des Abgasrohres ein. Dabei kann ein Ende der Schraubenfeder an der Innenfläche des aufgeweiteten Bereiches des Endrohres festgelegt sein. Die Befestigung kann beispielsweise durch Anheften mittels Punktschweißen, Klemmen oder eine Gewindeverbindung erfolgen.

Vorzugsweise ist die Schraubenfeder vollständig von dem Endrohr eingeschlossen und somit gegenüber äußeren Einflüssen geschützt.

Die Schraubenfeder ist in ihrem Hauptteil konisch ausgebildet. Eines ihrer Enden ist mit dem Abgasrohr und das andere Ende ist mit dem Endrohr verbunden. Die Windungen sind dabei im Bereich wenigstens eines Endes der Schraubenfeder schraubenlinienförmig in Form eines zylindrischen Gewindes ausgebildet und in einen entsprechend ausgebildeten Gewindeabschnitt vorzugsweise des Abgasrohres einschraubbar.

Der Gewindeabschnitt am freien Endes des zylindrisch ausgebildeten Abgasrohres wird vorzugsweise durch einen auf deren Mantelfläche wendelförmig befestigten Draht gebildet.

Als Draht kann ein durch Punktschweißen auf die Mantelfläche des Abgasrohrs aufgehefteter Federdraht dienen, der so befestigt ist, daß sich ein Gewinde mit beispielsweise 2 bis 3 Windungen bildet. Zweckmäßigerweise ist der Draht an seinem dem Ende des Abgasrohres abgewandten Ende abgewinkelt und bildet einen Anschlag beim Hineinschrauben des gewindeförmigen Bereiches der Schraubenfeder. Zur Bildung eines Schraubanschlages kann jedoch auch eine Verdickung des Abgasrohres dienen.

Insbesondere die Ausgestaltung, bei der die Schraubenfeder fest mit dem Endrohr verbunden ist und sich auf ein Gewinde am Abgasrohr aufschrauben läßt, ist kostengünstig herstellbar und ermöglicht eine einfache Montage des Endrohres am Abgasrohr. Sie läßt sich ferner so ausbilden, daß ein Verdrehen des Endrohres möglich ist, um die Abblasrichtung zu verändern (z. B. nach vorn, 45 ° nach rechts, 900, etc.).

Weitere vorteilhafte Ausgestaltungen und Weiterbildungen der Erfindung gehen aus den Unteransprüchen hervor.

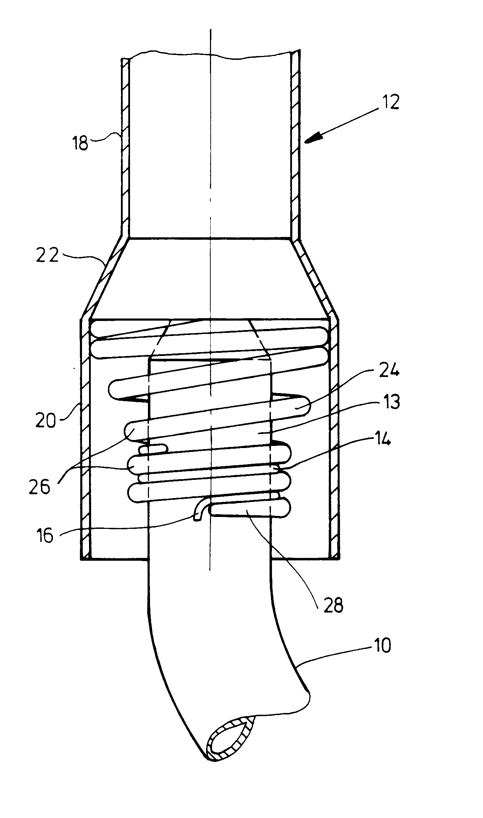

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Die einzige Figur zeigt die erfindungsgemäße Verbindung zwischen einem Abgasrohr 10 und einem Endrohr 12. Der untere Teil des Abgasrohres 10 ist mit dem nicht dargestellten Schalldämpfer einer Verbrennungskraftmaschine verbunden. Das freie Ende 13 des Abgasrohres 10 ist zylindrisch ausgebildet und vertikal nach oben ausgerichtet. Auf der Außenfläche des freien Endes 13 ist wendelförmig ein Draht 14 mittels Punktschweißen so befestigt, daß sich ein Gewindeabschnitt ergibt. Das zum Schalldämpfer weisende Ende 16 dieses Drahtes 14 ist aus seinem wendelförmigen Verlauf nach unten abgewinkelt und bildet einen Gewindeanschlag.

Das Endrohr 12 besteht aus drei Abschnitten. Der nur teilweise dargestellte obere Abschnitt 18 sowie der untere Abschnitt 20 sind zylinderförmig ausgebildet und verlaufen konzentrisch zueinander. Der untere Abschnitt 20 hat einen größeren Querschnitt als der obere Abschnitt 18 und ist mit diesem durch einen konischen Abschnitt 22 verbunden. Der untere Abschnitt 20 ist konzentrisch zum zylindrischen Ende 13 des Abgasrohres 10 angeordnet.

Innerhalb des unteren Abschnittes 20 des Endrohres 12 ist eine Schraubenfeder 24 befestigt, die vollständig innerhalb des unteren Abschnitts 20 liegt. Die Schraubenfeder 24 ist im wesentlichen als konische Zentrierfeder ausgebildet, deren obere weitere Windungen an der Innenfläche des unteren Abschnittes 20 des Endrohres 12 nahe des Überganges zum konischen Abschnitt 22 anliegen und z. B. durch Punktschweißen oder Klemmen befestigt sind. Nach unten hin nimmt der Durchmesser der Schraubenfederwindungen ab und geht in einen schraubenlinienförmigen Abschnitt 26 über, in dem der Windungsdurchmesser konstant bleibt. In diesem engeren schraubenlinienförmigen Abschnitt 26 ist der Innendurchmesser der Windungen etwa gleich dem Außendurchmesser des zylindrischen Endes 13 des Abgasrohres 10. Die Steigung der Windungen der Schraubenfeder 24 ist hier gleich der Steigung des wendelförmig ausgebildeten Drahtes 14. Diese Ausbildung ermöglicht ein einfaches Aufschrauben des schraubenlinienförmigen Abschnittes 26 der Schraubenfeder 24 auf den durch den Draht 14 gebildeten Gewindeabschnitt des Abgasrohres 10. Das abgewinkelte Ende 16 des Drahtes 14 dient hierbei als Gewindeanschlag, der die Aufschraubbewegung begrenzt, indem das untere Ende 28 der Schraubenfeder 24 gegen dieses Ende 16 stößt.

Die Schraubenfeder 24 verengt den ringförmigen Freiraum zwischen dem freien Ende 13 des Abgasrohrs 10 und dem unteren Abschnitt 20 des Endrohrs 12 und begrenzt somit das Schwallen (d. h. den Abgasaustritt beim Anlassen). Andererseits kann beim Dauerbetrieb der Verbrennungskraftmaschine der Abgasstrom durch das Endrohr 12 unter Ausnutzung des Ejektorprinzips aufrechterhalten werden.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Verbindung zwischen Abgasrohr (10) und Endrohr (12) der Verbrennungskraftmaschine eines Fahrzeuges, insbesondere eines landwirtschaftlichen oder Nutzfahrzeuges, wobei das freie Ende (13) des Abgasrohres (10) in einen Abschnitt (20) des Endrohres (12) hineinragt und zwischen beiden Rohren (10, 12) ein ringförmiger Zwischenraum ausgebildet ist und sich das Endrohr (12) am Abgasrohr (10) über ein elastisch verformbares Bauteil abstützt, dadurch gekennzeichnet, daß das Bauteil eine wenigstens bereichsweise konisch ausgebildete Schraubenfeder (24) ist, die in Rohrrichtung relativ weich und in Querrichtung relativ steif ausgebildet ist.

2. Verbindung nach Anspruch 1, dadurch gekennzeichnet, daß das Endrohr (12) einen aufgeweiteten Abschnitt (20) aufweist, der das freie Ende (13) des Abgasrohres (10) einschließt.

3. Verbindung nach Anspruch 2, dadurch gekennzeichnet, daß ein Ende der Schraubenfeder (24) an der Innenfläche des aufgeweiteten Abschnittes (20) des Endrohres (12) festgelegt ist.

4. Verbindung nach einem der Ansprüche 1 bis 3, dadurch gekennzeichnet, daß die Schraubenfeder (24) vollständig von dem Endrohr (12) eingeschlossen ist.

5. Verbindung nach einem der Ansprüche 1 bis 4, dadurch gekennzeichnet, daß das Abgasrohr (10) und das Endrohr (12) im Bereich der Verbindung im wesentlichen vertikal ausgerichtet sind.

6. Verbindung nach einem der Ansprüche 1 bis 5, dadurch gekennzeichnet, daß die Schraubenfeder (24) in einen entsprechend ausgebildeten Gewindeabschnitt des Abgasrohres (10) oder des Endrohres (12) einschraubbar ist.

7. Verbindung nach Anspruch 6, dadurch gekennzeichnet, daß auf der Mantelfläche des freien Endes (13) des zylindrisch ausgebildeten Abgasrohres (10) ein Draht (14) derart wendelförmig befestigt ist, das er die Windungen des Gewindeabschnittes bildet.

8. Verbindung nach Anspruch 7, dadurch gekennzeichnet, daß der Draht (14) an seinem dem Ende des Abgasrohres (10) abgewandten Ende (16) abgewinkelt ist.

9. Verbindung nach einem der Ansprüche 1 bis 8, dadurch gekennzeichnet, daß die Schraubenfeder (24) lediglich mit dem Abgasrohr (10) oder dem Endrohr (12) fest verbunden ist und die andere Verbindung ein Verdrehen des Endrohres (12) zuläßt.
